# EUROPÄISCHE PATENTSCHRIFT

(11) **EP 2 484 732 B1**
(45) Veröffentlichungstag und Bekanntmachung des Hinweises auf die Patenterteilung: **03.10.2018**
(21) Anmeldenummer: 12153999.3
(22) Anmeldetag: 06.02.2012
(51) Int. Cl.: C09D 183/04, B29D 11/00, H01B 3/46, H01L 21/312

(54) **Verbundstoff und Verfahren zu seiner Herstellung**
Composite and method for the production thereof
Matériau composite et son procédé de fabrication

(30) Priorität: 04.02.2011 DE 102011003677
(43) Veröffentlichungstag der Anmeldung: 08.08.2012
(73) Patentinhaber: Schott AG, 55122 Mainz (DE)
(72) Erfinder: Bockmeyer, Matthias, 55116 Mainz (DE); Rudigier-Voigt, Eveline, 55128 Mainz (DE); Schuhmacher, Jörg, 70806 Kornwestheim (DE); Hagemann, Volker, 55270 Klein-Winternheim (DE); Back, Franziska, 97422 Schweinfurth (DE)
(74) Vertreter: Fuchs Patentanwälte Partnerschaft mbB

(56) Entgegenhaltungen:
- EP-A1- 2 133 394
- EP-A1- 2 196 503
- DE-A1-102005 040 046
- US-A1- 2009 256 287
- WU ET AL: "A study towards improving mechanical properties of sol-gel coatings for polycarbonate", THIN SOLID FILMS, ELSEVIER-SEQUOIA S.A. LAUSANNE, CH, Bd. 516, Nr. 6, 23. Dezember 2007 (2007-12-23), Seiten 1056-1062, XP022400178, ISSN: 0040-6090, DOI: 10.1016/J.TSF.2007.06.149

## Beschreibung

Diese Erfindung betrifft einen Verbundstoff mit einem Substrat und einer Sol-Gel-Schicht, die auf dieses Substrat aufgebracht ist, sowie ein Verfahren zur Herstellung des Verbundstoffes.

Aus dem Stand der Technik sind viele Methoden bekannt, Substrate mit Beschichtungen zu versehen, insbesondere um Strukturen zur Funktionalisierung der Substrate einzubringen. Bekannt ist unter anderem das Heißprägen, wobei ein Stempel bei Temperaturen, die über der Erweichungstemperatur des Substrates liegen, mit einer Substratoberfläche in Kontakt gebracht wird. Bei Glas als Substrat, sind dies in der Regel Temperaturen über 500°C. Dieses Verfahren hat den Nachteil, dass der Verschleiß am Formgebungswerkzeug zu hohen Kosten führt. Außerdem können nur ganz spezielle Substrate mit einem speziellen Schmelz- und Erstarrungsverhalten verwendet werden. Die Größe der strukturierbaren Fläche sowie die Strukturvielfalt der realisierbaren Strukturen sind zudem stark eingeschränkt.

Ein anderer Ansatz ist, das Substrat mit einer zu strukturierenden Polymerschicht zu versehen. Die Polymerschicht kann dann beispielsweise mithilfe eines Stempels strukturiert werden. Ein wesentlicher Nachteil solcher Polymerschichten ist ihre mangelnde thermische Stabilität aufgrund des hohen Organikanteils. Solche Schichten sind oftmals nur bis etwa 100°C stabil.

Ferner gibt es das Verfahren des Sol-Gel-Nanoimprints, wobei ein Stempel in eine Sol-Gel-Schicht eingedrückt wird und anschließend eine thermische Vernetzung durchgeführt wird. Dieses Verfahren ist auf rigiden Substraten großflächig nur schwer umsetzbar. Diese Prozesse beruhten auf dem thixotropen Prägen. Dabei wird ein thixotroper Lack strukturiert; die so erhaltene Form bleibt aufgrund der thixotropen Eigenschaften des Lackes erhalten. Die Fixierung erfolgt üblicherweise ohne Kontakt mit einem Stempel thermisch oder via UV-Licht. Die hohe Thixotropie des Lackes wird durch den Zusatz von entsprechenden Additiven erreicht, welche in der Regel die Transmission oder die mechanische Beständigkeit sowie die Topfzeit des Lackes beeinflussen.

Auch bekannt ist das Prägen von lösungsmittelhaltigen Dünnschichtlacken. Hier können meist aufgrund des hohen Lösungsmittelgehaltes der Sole nur Schichtdicken bis zu 5 µm in einem industriell umsetzbaren Fertigungsschritt hergestellt werden, aufgrund der nicht optimalen Netzwerkbildung und Spannungsrissen bei der Herstellung von strukturierten Dickschichten. Auch sind die hergestellten Dickschichten nur bis etwa 200°C temperaturstabil bzw. reißen ab einer Schichtdicke von 5 µm bei höheren Belastungstemperaturen.

Folglich besteht ein Bedarf, Verbundstoffe bereitzustellen, die strukturierbare Schichten auf einem Substrat umfassen, welche selbst bei größeren Schichtdicken nicht reißen. Diese Verbundstoffe sollen über einen wirtschaftlichen Prozess herstellbar sein und eine hervorragende Temperaturstabilität aufweisen. Zusätzlich sollen sie transparent sein, damit sie für optische Anwendungen geeignet sind.

Die vorliegende Erfindung löst die Probleme des Standes der Technik mit den Gegenständen der Patentansprüche.

Die erfindungsgemäßen Verbundstoffe sind über das im Folgenden beschriebene Verfahren zugänglich. Dabei wird ein Substrat mit einer Beschichtungszusammensetzung beaufschlagt, um eine Sol-Gel-Schicht zu erhalten.

Der Verbundstoff umfasst ein Substrat, das auf wenigstens einer seiner Oberflächen eine Sol-Gel-Schicht aufweist. Diese Sol-Gel-Schicht ist temperaturstabil und strukturiert. Werden die hier beschriebenen Verfahrensschritte eingehalten und die Zusammensetzung der Beschichtungszusammensetzung berücksichtigt, so wird ein Verbundstoff mit den gewünschten Eigenschaften erhalten. Die Sol-Gel-Schicht hat dabei mit vorzugsweise wenigstens 5 µm, bevorzugt wenigstens 10 µm eine im Vergleich zum Stand der Technik erhöhte Schichtdicke. Dies wird dadurch ermöglicht, dass die Sol-Gel-Schicht bedingt durch ihre Zusammensetzung als auch durch das angewandte Herstellungsverfahren einen Elastizitätsmodul von 200 bis 10 000 N/mm², vorzugsweise von 500 bis 10 000 N/mm², aufweist. Diese Eigenschaft führt dazu, dass die Sol-Gel-Schicht auch bei großer Temperaturbelastung nicht reißt.

Der Elastizitätsmodul wird durch einen hohen Substitutionsgrad des anorganischen Netzwerkes in der Sol-Gel-Schicht erzielt. Bevorzugt werden zum Erzielen dieser Eigenschaft temperaturstabile siliziumorganische Verbindungen eingesetzt. Dadurch wird eine unter thermischer Belastung niedrig schrumpfende Schicht hergestellt, wodurch entsprechend keine Schrumpfungsspannungen auftreten. Ferner wird eine besondere Flexibilität des Schichtnetzwerkes erreicht und Schichtspannung kann relaxieren.

Zudem enthält die Sol-Gel-Schicht vorzugsweise wenigstens ein Polysiloxan. Das Polysiloxan unterstützt die Einstellung der benötigten Elastizität. Der Anteil an Polysiloxan an der Sol-Gel-Schicht soll vorzugsweise wenigstens 10 Gew.-% und höchstens 80 Gew.-% bezogen auf die Sol-Gel-Schicht betragen, weiter bevorzugt sind wenigstens 35 Gew.-% und höchstens 65 Gew.-%. Polysiloxane weisen erfindungsgemäß Siloxaneinheiten mit der folgenden allgemeinen Formel (I) auf:

RₙSiO_{(4-n)/2} (n=0, 1,2,3) I

Siloxaneinheiten können also mono-, di-, tri- und tetrafunktionell sein. In symbolischer Schreibweise stellt man dies durch die Buchstaben M (mono), D (di), T (tri) und Q (quatro) dar: [M]=R₃SiO_{1/2}, [D]=R₂SiO_{2/2}, [T]=RSiO_{3/2} und [Q]=SiO_{4/2}. Die entsprechenden Einheiten werden als M-, D-, T- bzw. Q-Einheiten bezeichnet. Ein aus Q-Einheiten konstituiertes Netzwerk entspräche also der Konstitution von Quarzglas.

Man kann folgende Gruppen unterscheiden: lineare Polysiloxane mit der Bauform [MDₙM] bzw. R₃SiO[R₂SiO]ₙSiR₃ (z.B. Poly(dimethylsiloxan)). Verzweigte Polysiloxane die als verzweigende Elemente trifunktionelle oder tetrafunktionelle Siloxaneinheiten aufweisen. Bauform [MₙDₘTₙ]. Die Verzweigungsstelle(n) ist/sind dabei entweder in eine Kette oder einen Ring eingebaut. Zyklische Polysiloxane sind ringförmig aus difunktionellen Siloxaneinheiten aufgebaut. Bauform [Dn].

Dabei können die Siliziumatome im Polysiloxanpolymer jeweils unabhängig voneinander unterschiedlich substituiert sein. Dabei sind die Reste R unabhängig voneinander bevorzugt ausgewählt aus Methyl, Ethyl, Propyl, Butyl, Pentyl, Hexyl, Phenyl und/oder Epoxy, Vinyl, Allyl sowie fluoriertem Alkyl; besonders bevorzugt sind Methyl- und/oder Phenyl-substituierte Polysiloxane. Es können auch verschiedene der vorgenannten Reste R in einem Polymer vorhanden sein. Werden diese Polysiloxane ausgewählt, wird die Elastizität der Sol-Gel-Schicht weiter verbessert und somit eine beständigere Schicht erhalten. Besonders Methyl- und/oder Phenyl-substituierte Organo-Polysiloxane verleihen der Sol-Gel-Schicht eine gute Wärmebeständigkeit. Es gilt grundsätzlich: je mehr Phenylgruppen im Polysiloxan vorliegen, desto besser ist die Temperaturbeständigkeit der Sol-Gel-Schicht.

In einer besonderen erfindungsgemäßen Ausführungsform sind die Polysiloxane durch einen hohen Anteil an T-Einheiten durch bevorzugt >80 %, ganz besonders bevorzugt >90 % charakterisiert. Gemeint ist der zahlenmäßige Anteil der T-Einheiten an allen Siloxaneinheiten im Polysiloxanmolekül. In einer weiteren erfindungsgemäßen Ausführungsform ist das eingesetzte Polysiloxan durch einen Anteil an D-Einheiten von etwa 5 bis 40 % gekennzeichnet. Über den Anteil der T- und D-Einheiten des Polysiloxans kann unter anderem der erfindungsgemäße E-Modul der Schichten eingestellt werden. Ein größerer Anteil an T-Einheiten erhöht, ein größerer Anteil an D-Einheiten vermindert den E-Modul.

Im Speziellen können erfindungsgemäß auch Oligo-, Poly- und/oder Polyhedral-Silsesquisiloxane als Polysiloxane eingesetzt werden.

Geeignete Polysiloxane werden zum Beispiel in US 3,585,065; US 4,107,148; US 3,170,890 und US 4,879,344 beschrieben. Der Inhalt dieser Druckschriften wird durch diesen Verweis in diese Beschreibung aufgenommen.

In einer besonderen erfindungsgemäßen Ausführungsform werden als Polysiloxane thermisch beständige polyestermodifizierte Polysiloxane eingesetzt. Derartige polyestermodifizierte Polysiloxane sind beispielsweise in DE 3 535 283, EP 0 103 367, US 4 076 695, EP 0 444 751, US 5 227 435, US 3 701 815, EP 0 212 125, DE 10 2005 051 579 aufgeführt.

Entsprechende polyestermodifizierte Polysiloxane werden beispielsweise von Evonik Industries unter den Markennamen Silikoftal HTT, Silikoftal HTL, Silikoftal HTL-2, Silikoftal HTL,-3, Silikoftal HTS vertrieben. Es sind also Polysiloxane gemeint, die über einen Polyesteranteil verfügen, der vorzugsweise kovalent an das Polysiloxan gebunden ist.

Der Polyestergehalt in den polyestermodifizierten Polysiloxanen kann dabei von 5 - 80 Gew.-%, besonders bevorzugt 20 - 70 Gew-%, besonders bevorzugt 30 - 50 Gew-% bezogen auf den Feststoffgehalt des Polysiloxans ausmachen. Über den Polyestergehalt des Polysiloxanes kann ebenfalls der E-Modul der polysiloxanmodifizierten Sol-Gel-Schicht eingestellt werden. Der Polyesteranteil des polyestermodifizierten Polysiloxans setzt sich dabei bevorzugt aus Reaktionsprodukten von epsilon-Caprolacton, Phthalsäure, Trimethylolpropan, Ethylenglycol, Diethylenglycol, Propylenglycol, Glycerin, Bisphenol A, Pentaerythritol, Trimethylolethane, Trimethylolpropaneglucose, 1,4-Cyclohexanedimethanol, Polyvinylalkohol und/oder Neopentylglykol zusammen.

In einer bevorzugten Ausführungsform liegt die mittlere molekulare Masse (Zahlenmittel) des Polyesteranteils des polyestermodifizierten Polysiloxans zwischen 1000 und 50 000 g/mol, bevorzugt zwischen 1500 und 30 000 g/mol, ganz besonders bevorzugt zwischen 2000 und 25 000 g/mol.

Ferner kann der Schichtschrumpf und damit die Rissbildungsneigung der strukturierten Schichten durch den Einsatz von polyestermodifizierten Polysiloxanen deutlich minimiert werden.

In einer besonderen sehr wetterbeständigen erfindungsgemäßen Ausführungsform sind in dem polyestermodifizierten Polysiloxan noch lineare Dicarbonsäuren, wie beispielsweise Adipinsäure, enthalten. Über den Zusatz dieser linearen Carbonsäuren lässt sich ebenfalls der E-Modul der Schicht einstellen. Die linearen Dicarbonsäuren sind vorzugsweise kovalent in das Polyester eingebunden, sie bilden dann einen Baustein des Polymers.

Der Einbau der polyestermodifizierten Polysiloxane in das Sol-Gel-Netzwerk erfolgt ebenfalls unter Wärme, durch die Reaktion mit den Alkoxy- und/oder Hydroxylgruppen des Polysiloxannetzwerkes und/oder Polyesternetzwerkes. Bei der Reaktion kommt es dabei zur Abspaltung von Wasser bzw. Alkohol und zur Bildung kovalenter Si-O-Si und/oder Si-O-C Bindung.

In einer besonderen erfindungsgemäßen Ausführungsform erfolgt der Einbau der Polysiloxane in das Sol-Gel-Netzwerk über Wasserstoffbrückenbindungen.

Um die benötigte Temperaturstabilität zu gewährleisten, soll das Polysiloxan einen Substitutionsgrad von typischerweise zwischen 0,5 bis 1,5, bevorzugt 1,0 bis 1,5 aufweisen. Der Substitutionsgrad ist die mittlere Anzahl der Alkyl- und Arylsubstituenten R gemäß Formel (I) pro Siliziumatom im Polysiloxan. Es werden vorzugsweise Polysiloxane verwendet, die bei hohen Gebrauchstemperaturen selbstkondensieren. Dafür ist eine hohe Hydroxylfunktionalität und/oder Alkoholatgruppenfunktionalisierung notwendig, die erfindungsgemäß bei 1 bis 7,5 Gew.-% Hydroxyl und/oder Alkoholatgruppen, bevorzugt 2 bis 5 Gew.-%, bezogen auf das Polysiloxan beträgt. Der hohe Anteil an Hydroxyl- und/oder Alkoholatgruppen-Funktionalitäten ist weiterhin notwendig für eine kovalente Einbindung der Polysiloxanvorstufe über Si-O-Si - Bindungen in das hybridpolymere Sol-Gel-Netzwerk.

Um die erfindungsgemäßen optischen Schichteigenschaften einstellen zu können, ist es entscheidend, dass das gewählte Polysiloxan (Harz oder in Lösung) kompatibel mit der Hybridpolymeren Sol-Gel-Komponente ist. Das bedeutet vorzugsweise, dass das Polysiloxan über eine Kondensationsreaktion reaktiv in das Sol-Gel-Netzwerk eingebaut wird.

Entscheidend dabei ist, dass sich das Polysiloxan homogen in das Schichtnetzwerk einbaut und es beispielsweise nicht zu Entmischungen und somit zu Trübungen, Streuung, Brechzahlschwankungen, oder Schichtinhomogenitäten in den Schichten kommt. Von den Erfindern wurde herausgefunden, dass hierfür besonders eine spezielle Art von Polysiloxanen geeignet ist. Zu berücksichtigen ist hierbei der Hydroxylgruppengehalt und Alkoholatgruppengehalt in den Siloxanen, der Vernetzungsgrad, die mittlere molekulare Masse, der SiO₂ -Gehalt, der Gehalt an weiteren organischen Additiven, beispielsweise Polyester, und das Phenyl/Methylgruppen-Verhältnis.

Zudem wird die Topfzeit bzw. Siebdruckfähigkeit und/oder Standzeit auf dem Sieb der Sol-Gel-Vorstufe von der Wahl des Polysiloxans beeinflusst. Wichtig hierfür sind der Alkoholatgruppengehalt, der Silanolgruppengehalt, der Fluor und/oder Epoxydgruppenanteil des verwendeten Polysiloxans.

Ferner wird die Prägbarkeit der Sol-Gel-Vorstufe und die erzielbare Schichtdicke von der Wahl des Polysiloxans beeinflusst. Wichtig hierfür sind vor allem der Anteil an T- und D-Einheiten im Polysiloxan, der Polyesteranteil, der Fluoranteil und Epoxydgruppenanteil des verwendeten Polysiloxans.

Damit die erfindungsgemäßen Eigenschaften optimal eingestellt werden können, sollten Polysiloxane verwendet werden, die Viskositäten im Bereich von zwischen 0,1 und 10 Pas, bevorzugt zwischen 2 und 5 Pas, bei 150°C aufweisen.

Die bevorzugten Polysiloxane weisen einen Hydroxylgehalt und/oder Alkoholatgruppengehalt von 1,0 bis 7,5 Gew.-%, bevorzugt 2 bis 6 Gew.-% bezogen auf das Gewicht des Polysiloxans auf.

Bevorzugt soll das Phenyl/Methyl-Verhältnis in dem eingesetzten Polysiloxan bei 1,0/1 bis 2,7/1 liegen, weiter bevorzugt bei 1,0/1 bis 1,3/1 und am meisten bevorzugt bei 1,1/1 bis 1,2/1 liegen.

Bevorzugt wird ein Gemisch aus Polysiloxanen und/oder Polysilsesquisiloxanen verwendet. Ganz besonders bevorzugt wird ein Gemisch aus polyestermodifizierten Polysiloxanen und/oder phenyl/methylsubstituierten Polysiloxanen und fluorierten und/oder epoxydfunktionalisierten Polysiloxanen verwendet. Der Anteil der fluorierten und/oder epoxydfunktionalisierten Polysiloxanen an der Gesamtpolysiloxanmasse beträgt dabei bevorzugt <5 Gew.-%, ganz besonders bevorzugt <2 Gew-%. Der Anteil an polyestermodifizierten Siloxanen an der Gesamtpolysiloxanmasse liegt bevorzugt bei größer 50 Gew.-%, ganz besonders bevorzugt sind größer 80 Gew.-%.

Bevorzugt sollte die Glasübergangstemperatur des Polysiloxans oberhalb von 40°C, vorzugsweise sogar oberhalb von 45°C, liegen. Um den Schrumpf der ersten Schicht bei der Herstellung zu minimieren, sollte Polysiloxan verwendet werden, welches 0,2 Gew.-% oder weniger organische Lösungsmittel, vorzugsweise sogar 0,1 Gew.-% oder weniger organische Lösungsmittel, aufweist.

Bevorzugt wird hierbei ein Polysiloxanharz verwendet. Dieses zeichnet sich zudem in einer besonderen Ausführungsform durch einen SiO₂ - Gehalt von 50 Gew.-% bis 65 Gew.-%, bevorzugt 50 Gew.-% bis 55 Gew.-% aus, bestimmt nach thermischer Belastung bei 700 °C. In einer speziellen erfindungsgemäßen Ausführungsform kann der SiO₂-Gehalt des Polysiloxans auch bei 75 Gew.-% bis 85 Gew.-% liegen. Der SiO₂-Anteil wird dabei durch den Pyrolyseverlust nach einer thermischen Behandlung bei 1000°C für 1 h bestimmt. Beispielsweise kann dies auch durch die dem Fachmann bekannte Methode der Thermogravimetrie erfolgen. Eine geeignete Methode findet sich beispielsweise in H.

Geßwein, "Entwicklung hochfester Net shape Oxidkeramiken im System Al₂O₃-SiO₂-ZrO₂", Forschungszentrum Karlsruhe, Wissenschaftliche Berichte, FZKA7186, 2005.

Die mittlere molekulare Masse des eingesetzten Polysiloxans und/oder Polysilsesquisiloxanes zwischen 1.500 und 300.000 g/mol, bevorzugt zwischen 2.000 und 5.000 g/mol und/oder zwischen 200.000 und 300.000 g/mol und/oder von 1.500 bis 2.500 g/mol. Mit anderen Worten, es können auch Mischungen verschiedener Polysiloxane mit unterschiedlichen Molekulargewichten zugegeben werden. Wenn nichts Anderes angegeben ist, ist mit der "mittleren molekularen Masse" stets das Zahlenmittel Mₙ gemeint.
Der Verbundstoff lässt sich mit einem Verfahren herstellen, welches folgende Schritte umfasst:
- Beschichten eines Substrates mit einer Beschichtungszusammensetzung, so dass auf wenigstens einer Oberfläche des Substrates eine Primärschicht erhalten wird,
- Härten der Schicht, um eine Sol-Gel-Schicht zu erhalten.
Während des Härtens der Schicht findet die Sol-Gel-Konversion statt, bei der die Beschichtungszusammensetzung (das Sol) zum Gel konvertiert. Danach schließen sich weitere Härtungsschritte an, die weiter unten beschrieben sind.
Der Vorteil dieses Verfahrens gegenüber dem Stand der Technik besteht unter anderem darin, dass mit der beschriebenen Methode ein Verfahren existiert, das eine große Designfreiheit erlaubt. Es erlaubt Schichten auch lokal begrenzt, fein strukturiert oder vollflächig auf einem rigiden Material, wie Glas oder Glaskeramik, darzustellen. Dabei ist das Verfahren mit reproduzierbarem Ergebnis durchführbar und erlaubt die Herstellung identischer Gegenstände mit entsprechenden Strukturschichten.
Die so erzeugte Sol-Gel-Schicht auf dem Substrat wird vor dem Härten mit einer Struktur versehen. Dies geschieht vorzugsweise mit einem Prägestempel, wie er weiter unten beschrieben wird.
In einer bevorzugten Ausführungsform des erfindungsgemäßen Verfahrens umfasst dieses ferner den Schritt:
- Beschichtung der Sol-Gel-Schicht mit einer Funktionsschicht.
   Mit der Funktionsschicht können der Sol-Gel-Schicht weitere Eigenschaften im Sinne einer Oberflächenfunktionalisierung verliehen werden. Dies kann beispielsweise durch Beschichtung mit einer hydrophoben Beschichtungslösung erreicht werden. Dadurch wird der Effekt erzielt, dass die so beschichtete Oberfläche verbesserte Schmutzabweisungseigenschaften erhält. Möglich ist auch die Beschichtung der Sol-Gel-Schicht mit einer Metallschicht oder einer Lackschicht.

Wie oben beschrieben wird die Sol-Gel-Schicht durch Einbringen einer Struktur modifiziert. Vorzugsweise werden damit Strukturen mit optischen Funktionen eingefügt, wie etwa diffraktive oder refraktive Strukturen.

Die Sol-Gel-Schicht im Verbundstoff kann so strukturiert werden, dass eine Strukturtiefe von größer 5 µm, vorzugsweise größer 20 µm und besonders bevorzugt bis 200 µm, weiter bevorzugt 10 µm bis 50 µm erzielt wird.

Bei erfindungsgemäßer Ausgestaltung der Sol-Gel-Schicht, hält diese vorzugsweise mindestens Temperaturbelastungen von 170°C, insbesondere 220°C und bevorzugt sogar 250°C wenigstens für 10 Minuten stand. Die Sol-Gel-Schicht hat eine hohe Schichtdicke, um die Strukturtiefen zu ermöglichen. Es ist bemerkenswert, dass mit dem erfindungsgemäßen Material und der erfindungsgemäßen Methode solch hohe Schichtdicken rissfrei und temperaturbeständig hergestellt werden können. Dies wird in erster Linie durch die Zusammensetzung der Sol-Gel-Schicht erzielt, welche wiederum durch die Verwendung einer geeigneten Beschichtungszusammensetzung und Befolgung des erfindungsgemäßen Verfahrens erreicht werden kann.

Der erfindungsgemäße Verbundstoff ist nicht nur temperaturbeständig, sondern verfärbt sich auch unter Temperatureinwirkung bei beispielsweise 250 °C nicht, sondern behält seine optischen Eigenschaften. Dies ist in einer erfindungsgemäßen Ausführungsform unter anderem durch die Verwendung eines polyestermodifizierten Polysiloxans zurückzuführen.

Ferner ist der Verbundstoff aufgrund seiner hydridpolymeren Zusammensetzung und der Siloxanmodifizierung besonders witterungs- und UV-beständig

Über Oberflächenstrukturierung und Variation der Zusammensetzung der Sol-Gel-Schicht kann erreicht werden, dass die Schicht schmutzabweisende Eigenschaften erhält.

Die Sol-Gel-Schichten sind so ausgestaltet, dass sie eine hohe Haftung zum Substrat aufweisen. Ein Klebstoff ist daher nicht erforderlich und erfindungsgemäß bevorzugt befindet sich zwischen Substrat und Sol-Gel-Schicht keine weitere Schicht, insbesondere keine Klebstoffschicht.

Aufgrund der Zusammensetzung der Sol-Gel-Schicht, ist diese eine dichte Schicht, die nahezu porenfrei ist. Nahezu porenfrei bedeutet, dass die Schicht eine Porosität von kleiner 10 Volumen-%, bevorzugt kleiner 5 Volumen-%, ganz besonders bevorzugt kleiner 2 Volumen-% aufweist.

Das erfindungsgemäße Verfahren hat den Vorteil, dass es mit sehr geringen Mengen an organischen Lösungsmitteln auskommt, was sich positiv auf die Umweltverträglichkeit und die Arbeitssicherheit auswirkt. Ferner ist mit der unten beschriebenen Beschichtungszusammensetzung des Sols gewährleistet, dass eine hinreichende Prozessstabilität aufgrund der Optimierung der Topfzeit des Sols erzielt wird.

Wird das erfindungsgemäße Verfahren verwendet, kann eine Strukturtreue von größer 80%, bevorzugt größer 90% gegenüber dem Master, der weiter unten beschrieben wird, erreicht werden.

Die Sol-Gel-Schicht erhält erst dadurch ihre hervorragenden Eigenschaften, dass sie ein hybridpolymeres Sol-Gel-Material, bevorzugt mit einem Polysiloxan modifiziert, umfasst. Dadurch ergeben sich die besonderen Eigenschaften hinsichtlich des Elastizitätsmoduls aber auch der Oberflächenenergie, der mechanischen und chemischen Beständigkeit und der möglichen Transparenz. Ferner ist dieses Verfahren auch industriell einsetzbar, so dass die Verbundstoffe kostengünstig herstellbar sind.

Die Sol-Gel-Schicht kann - wie sich aus dem unten beschriebenen Verfahren ergibt - leicht großflächig aufgetragen werden. Bevorzugt wird das Substrat sogar vollflächig mit der Sol-Gel-Schicht versehen. Dabei beträgt die Größe der beschichteten Fläche vorzugsweise wenigstens 0,1 m², weiter bevorzugt wenigstens 0,25 m². Bevorzugt ist die Sol-Gel-Schicht vollflächig mit einer Strukturierung versehen, die vorzugsweise gemäß dem unten stehenden Verfahren eingebracht wurde. In bevorzugten Ausführungsformen ist die strukturierte Fläche wenigstens 0,1 m², weiter bevorzugt wenigstens 0,25 m² groß.

Die Substrate sind bevorzugt rigide Substrate. Zu den rigiden Substraten werden Substrate gezählt, welche zumeist aus sprödbrechenden Materialien wie beispielsweise Polymeren, Glas, Keramik oder Glaskeramik bestehen. Zu rigiden Substraten zählen allgemein Gläser, Keramiken und Glaskeramiken mit Substratdicken von vorzugsweise 0,3 bis 100 mm, weiter bevorzugt 10 bis 50 mm. Dies können beispielsweise eisenhaltige oder eisenreduzierte Kalknatrongläser, korrosionsbeständige Gläser, wie Borosilicatglas, Alumosilicatgläser oder Alkalien-reduzierte Gläser, optische Gläser mit speziell angepassten optischen Dispersionseigenschaften, wie sie beispielsweise von der Schott AG oder Corning vertrieben werden, oder transparente oder volumengefärbte Glaskeramiken sein. Rigide Substrate können dabei chemisch oder thermisch vorgespannt sein.
In einer besonderen Ausführungsform kann es sich beim Substrat um ein Rohr oder und ein bereits gebogenes Substrat mit einem Krümmungsradius von 0,05 - 1000 m, bevorzugt 1 - 50 m handeln.
Die bevorzugt in der Sol-Gel-Schicht vorhandenen refraktiven Strukturen haben vorzugsweise eine Strukturtiefe von größer 5 µm. Werden diffraktive Strukturen eingebracht, haben diese vorzugsweise eine Strukturtiefe von größer 0,2 µm. Vorzugsweise haben die Sol-Gel-Schichten refraktive und diffraktive Strukturen. Werden in die Sol-Gel-Schicht Strukturen für dekorative Anmutungen eingebracht, so haben diese eine stochastische Rauigkeit mit einer Strukturtiefe von 200 nm - 100 µm. Wird eine gebürstete Oberfläche erzeugt so hat die Prägung eine Strukturtiefe von kleiner 5000 nm, bevorzugt kleiner 3000 nm, ganz besonders bevorzugt kleiner 1500 nm. "Strukturtiefe" bedeutet die mittlere Tiefe der in die Schicht eingeprägten Struktur. Bevorzugt weist die Sol-Gel-Schicht eine makroskopische, laterale Strukturierung auf, die mittels Siebdruck, Tampondruck, Inkjet oder Offset kostengünstig aufgetragen werden kann. Eine laterale Strukturierung bedeutet dabei, dass auf dem Substrat nur lokal der später über das Prägeverfahren strukturierte Lack aufgebracht worden ist. Die Substratoberfläche ist somit bedingt durch das Beschichtungsverfahren nicht vollständig beschichtet und somit auch nicht vollständig strukturiert. Die laterale Auflösung der Strukturierung liegt dabei bedingt durch die Auflösung des verwendeten Beschichtungsverfahren bei >10 µm besonders bevorzugt >20 µm ganz besonders bevorzugt >100 µm. Die typischerweise erreichte laterale Auflösung des Siebdruckverfahrens liegt bei >20 µm. Die erfindungsgemäße Sol-Gel-Schicht ist so ausgestaltet, dass sie in einem einzigen Beschichtungsschritt, vorzugsweise mittels Siebdruck, herstellbar ist. Zudem ist die Schicht geprägt, weist also eine Prägung auf.
Um Strukturen einzubringen wird vorzugsweise zunächst ein Master hergestellt, wie nachfolgend beschrieben wird: Zur Prägung wird ein Prägestempel benötigt. Die Herstellung des Prägestempels erfordert erfindungsgemäß die Verwendung eines sogenannten Masters. Der Master ist ein Gegenstand, der die später in der Sol-Gel-Schicht zu realisierende Struktur aufweist. Der Master bildet damit die Grundlage für die Form der Strukturierung der Sol-Gel-Schicht. Damit kann sichergestellt werden, dass auch dann, wenn ein Stempel im Laufe der Zeit abgenutzt ist, ein identischer Stempel ausgehend von dem Master erneut hergestellt werden kann. Er besteht daher vorzugsweise aus einem beständigen Material, wie etwa aus Metall.

Alternativ kann natürlich auch einfach ein Prägestempel direkt hergestellt werden, indem die zu realisierende Struktur der Sol-Gel-Schicht im Negativ in einen Stempelrohling eingebracht wird. Dabei kann ganz einfach eine Vorlage abgeformt werden, die zuvor vorzugsweise gereinigt wurde.

Der Master soll vorzugsweise vor Verwendung gereinigt werden, so dass er staub- und fusselfrei ist. Zur Herstellung des Prägestempels wird der Master dann vorzugsweise mit einer Polymermasse in Kontakt gebracht, damit sich die Struktur des Masters auf die Polymermasse überträgt. In bevorzugten Ausführungsformen wird die Polymermasse auf den sauberen Master gegossen. Die Polymermasse ist vorzugsweise eine Silikonformmasse. Nach Übertragung der Masterstruktur auf die Polymermasse wird die Masse vorzugsweise ausgehärtet. Die Aushärtung erfolgt mit dem Fachmann bekannten Verfahren, jedoch bevorzugt unter Anwendung von Wärme.

Komplexe Strukturen können manchmal Blasen zwischen der Polymermasse und dem Master einschließen. Diese werden vorzugsweise mit Unterdruck entfernt. Der so erhaltene Prägestempel wird von der Vorlage abgezogen und ist üblicherweise sofort einsatzbereit. Nach einem Prägevorgang können diese Stempel mittels üblicher Reinigungslösungen, insbesondere mit Ethanol oder Isopropanol, gereinigt und wiederverwendet werden.

Zum Beschichten des Substrates wird eine Beschichtungszusammensetzung aufgebracht, welche die Primärschicht bildet. Die Beschichtungszusammensetzung ist ein Sol, also bevorzugt eine kolloidale Dispersion. Die Beschichtungszusammensetzung kann auf dem Substrat nach Sol-Gel-Konversion eine feste Schicht ausbilden. Das Beschichten des Substrates kann in einem kontinuierlichen, kostengünstigen und damit produktionstauglichen Abscheideverfahren verwirklicht werden. Dies kann in einem Verfahren realisiert werden, bei welchem die Primärschicht der Beschichtungszusammensetzung, also eine Sol-Gel-Schicht, einseitig mittels Flüssigbeschichtungsverfahren auf die Oberfläche des Substrates aufgebracht wird. Die möglichen Flüssigbeschichtungsverfahren sind dem Fachmann bekannt.

Die Beschichtungszusammensetzung ist in einer bevorzugten Ausführungsform derart gestaltet, dass sie mittels Siebdruck aufgebracht werden kann. So wird ein partieller Auftrag der Primärschicht ermöglicht. Dies hat einen signifikanten Vorteil: dadurch dass Bereiche, die nicht mit der Sol-Gel-Schicht versehen werden sollen, ausgespart werden können und freie Bereiche, die häufig für Displayanwendungen, Touches oder Verklebungen benötigt werden, keine Strukturschicht erhalten, entfällt in diesen Bereichen die aufwendige Kontrolle von Schichtunebenheiten, Inhomogenitäten und Verschmutzungen.
Als Beschichtungsmethode können einseitiger Siebdruck, Tampondruck, Dip-Coaten, Roller-Coating, Fluten, Rakeln, Sprühen, oder andere gängige Flüssigbeschichtungstechnologien eingesetzt werden. Die Substrate können einseitig, zweiseitig oder mehrseitig beschichtet werden. Der Siebdruck ist besonders bevorzugt, weil damit eine bereits lateral strukturierte Primärschicht aufgetragen werden kann.
Die Beschichtungszusammensetzung umfasst optional Partikel, vorzugsweise sind die Partikel Nanopartikel. Die Partikel können amorpher, hybridischer oder kristalliner Art sein. Auch Mischungen verschiedener Partikelarten können erfindungsgemäß verwendet werden. Über die stoffliche Zusammensetzung der Partikel kann unter anderem eine
Brechzahlanpassung der Strukturschicht an das Substrat und/oder die Funktionsschicht realisiert werden. In bevorzugten Ausführungsformen werden die Partikel so ausgewählt, dass die Strukturschicht selbst funktionalisiert wird, so dass vorzugsweise keine separate Funktionsschicht mehr benötigt wird. So ist es beispielsweise möglich, leitfähige Partikel einzubauen, um eine elektrostatische Aufladung zu unterbinden. In einer weiteren Ausführungsform sind in der Strukturschicht hydrophobe Partikel enthalten. In einer weiteren Ausführungsform ist die Strukturschicht durch die Beimengung von Titandioxid (TiO₂) photokatalytisch aktiv und/oder die Brechzahl der Schicht wird gezielt angepasst. Besonders bevorzugt sind Siliziumdioxid(SiO₂)-Partikel, weil durch ihre Verwendung ein Strukturschrumpf von lediglich 0 bis 25% bezogen auf die Strukturtiefe des Masters erzielt werden kann. Die Partikel, die der Beschichtungszusammensetzung zugesetzt werden können, sind natürlich in bevorzugten Ausführungsformen in der Sol-Gel-Schicht des Verbundstoffes enthalten.
Die Partikel sind bevorzugt irregulär geformt und/oder faserförmig. Die Partikel haben vorzugsweise Durchmesser von 5 bis 15 nm und vorzugsweise Längen von 5 bis 150 nm. Alternativ können auch Partikel verschiedener Größen von 5 bis 125 nm eingesetzt werden. Die Partikel können auch kugelförmig sein. Wenn nichts anderes angegeben ist, wird sich in dieser Beschreibung bei Partikelgrößenangaben auf den Ferret'schen Durchmesser bestimmt mit der Methode der Dynamischen Lichtstreuung bezogen.
Die Beschichtungszusammensetzung umfasst Sol-Gel-Vorstufen. Als Sol-Gel-Vorstufen werden Alkoxysilane verwendet, welche mit organisch vernetzbaren Gruppen funktionalisiert sind. Besonders bevorzugt sind dies epoxyfunktionalisierte und methacrylatfunktionalisierte Alkoxysilane. Für eine spezielle erfindungsgemäße Ausführungsform werden ganz besonders bevorzugt UV-anregbare radikalisch polymerisierbare Hybridpolymere eingesetzt.

Die Beschichtungszusammensetzung umfasst bevorzugt amorphes oder hybridpolymeres SiO₂.

In einer besonderen Ausführungsform werden anorganische SiO₂-Nanopartikel der Beschichtungszusammensetzung zugegeben. Bevorzugt beträgt der Volumenanteil der Nanopartikel an der Beschichtungszusammensetzung mehr als 10%, weiter bevorzugt mehr als 20%. Die Nanopartikel werden bevorzugt als alkoholische Dispersion zugesetzt.

Bevorzugt umfasst die Beschichtungszusammensetzung auch Partikel in Form von amorphen oder nanokristallinen Metalloxiden und/oder Metallfluoriden. Bevorzugte Metalloxide sind Titandioxid (Anatase und/oder Rutile, TiO₂), Zirkondioxid (ZrO₂), Y₂O₃ stabilisiertes Zirkonoxid, Aluminiumoxid (Böhmite, alpha-Al₂O₃, gamma-Al₂O₃), Zinkoxid (ZnO), Indiumzinnoxid (ITO), Magnesiumfluorid (MgF₂) und Calciumfluorid (CaF₂). Vorzugsweise können auch deren hybridpolymere Derivate oder Verbindungen eingesetzt werden. Die Metalloxide können in Form von Partikeln vorliegen. Insbesondere umfasst die Beschichtungszusammensetzung Sol-Gel-Vorstufen des Siliziums, Titans, Zirkons, Aluminiums, Zinks, Magnesiums, Calciums, Zinns oder Mischungen davon. Ganz besonders bevorzugt sind die Sol-Gel-Vorstufen SiORₓR_{y}, TiORₓX_{y}, ZrORₓX_{y}, AlORₓX_{y}, ZnORₓX_{y}, MgORₓX_{y}, CaORₓX_{y} und SnORₓX_{y}. Darin sind R und X Alkyl- und/oder Arylreste. Die Indices x und y sind ganze Zahlen vorzugsweise unabhängig voneinander von 0 bis 3, insbesondere 0 bis 2.

In einer Ausführungsform ist die Partikelgröße der Sol-Gel-Vorstufe in einem Bereich von 0,05 bis 200 nm, besonders bevorzugt von 1 bis 100 nm. Die Partikelform kann dabei insbesondere sowohl kugelförmig als auch irregulär sein.

In einer besonderen erfindungsgemäßen Ausführungsform werden der polysiloxanmodifizierten Sol-Gel-Vorstufe hochbrechende Nanopartikel mit einer Brechzahl von größer 2,1, ganz besonders bevorzugt größer 2,3 zugeben. Anatase hat bspw. eine Brechzahl von größer 2,5 und Rutile von größer 2,7. Der Massenanteil an amorphen und/oder kristallinen Partikeln bezogen auf den Gesamtfeststoffgehalt in der Schicht, liegt dabei vorzugsweise bei größer 5 Gew.-%, bevorzugt größer 10 Gew.-%.

In einer besonders bevorzugten Ausführungsform umfasst die Beschichtungszusammensetzung als Sol-Gel-Vorstufe eine UV-härtbare hybridpolymere, hydrolysierte und kondensierte Alkoxysilanvorstufe, insbesondere Glycidylpropyltriethoxysilan und/oder Glycidylpropyltrimethoxysilan und/oder Methacryloxypropyltriethoxysilan und/oder Methacryloxypropyltrimethoxysilan und/oder Methacryloxypropylmetyhldiethoxysilan und/oder Methacryloxypropylmethyldimethoxysilan welche mit Polysiloxanen funktionalisiert werden. Bevorzugt werden methyl- und/oder phenylfunktionalisierte Polysiloxane verwendet. Die Sol-Gel-Schicht auf dem Substrat umfasst also vorzugsweise die Reaktionsprodukte hierin beschriebener Sol-Gel-Vorstufen, insbesondere Alkoxysilanen, mit hierin beschriebenen Polysiloxanen.

Bevorzugt wird dabei als Sol-Gel-Vorstufe ein Sol-Gel-abgeleitetes Hybridpolymer eingesetzt, welches aus der Umsetzung eines Silans mit der allgemeinen Formel R¹Si(OR)₃ und optional R²Si(OR)₃ oder R¹R²Si(OR)₂, mit einem Tetraalkoxysilan mit der allgemeinen Formel, Si(OR)₄ im Rahmen einer sauren Hydrolyse und Kondensationsreaktion erhalten worden ist. R¹ ist bevorzugt eine UV-härtbare organische Funktionalität, bevorzugt eine radikalisch polymerisierende, ganz besonderes bevorzugt eine methacrylatbasierte. OR ist eine Alkoholatgruppe, bevorzugt Ethylat. R² ist ein aromatischer oder aliphatischer organischer Rest, bevorzugt Methyl und/oder Phenyl. Die Sol-Gel-Vorstufe ist vorzugsweise dadurch gekennzeichnet, dass das T- zu Q - Einheiten-Verhältnis bei 3:1 bis 5:1, bevorzugt 3,5:1 bis 4,5:1 liegt. In der bevorzugten Ausführungsform ist die Sol-Gel-Vorstufe dadurch gekennzeichnet, dass sie keine M- und/oder D - Einheiten enthält.

Der Einsatz von Polysiloxanen in der Beschichtungszusammensetzung führt zu einer elastischeren Sol-Gel-Schicht. Ein Grund dafür könnte sein, dass die Sol-Gel-Schicht weniger stark vernetzt ist, als dies beim Einsatz von monomeren Vorstufen ohne den Zusatz von Polysiloxanen der Fall wäre. Die Polysiloxane sind bereits zuvor zu großen Molekülen polymerisiert und stören daher in der Sol-Gel-Schicht die ansonsten stark vernetzte Struktur. Auch weisen die Polysiloxanvorstufen einen hohen Anteil an T- und oder D - Einheiten auf. Dies ist wahrscheinlich der Grund für die erfindungsgemäße Elastizität und Temperaturbeständigkeit der Sol-Gel-Schichten dieser Erfindung.

Besonders bevorzugte weitere hybridpolymere Sol-Gel-Vorstufen sind Vinylsilane, Allylsilane, Urethansilane und Mischungen dieser Vorstufen. Untern den Vinylsilanen sind Vinylalkoxysilane, insbesondere Vinyltriethoxysilan und/oder Vinyltrimethoxysilan, besonders bevorzugt. Unter den Allylsilanen sind Allylalkoxysilane, insbesondere Allyltriethoxysilan und/oder Allyltrimethoxysilan, besonders bevorzugt. Unter den Urethansilanen sind Dimethacrylaturethanalkoxysilane, insbesondere Glycerin-1,3-dimethacrylaturethan-triethoxysilan, besonders bevorzugt.

In bevorzugten Ausführungsformen wird der Beschichtungszusammensetzung eines oder mehrere Amino-funktionalisierte Silane zugesetzt. Bevorzugte Amino-funktionalisierte Silane sind 3-Aminopropyl-trimethoxysilan, [3-(Methylamino)propyl]trimethoxysilan, [3-(Phenylamino)propyl]trimethoxysilan, [3-(Diethylamino)propyl]trimethoxysilan, 3-[2-(2-Aminoethylamino)ethylamino]propyltrimethoxysilan, N-[3-(Trimethoxysilyl)propyl]ethylendiamin, 1-[3-(Trimethoxysilyl)propyl]harnstoff, Bis(3-(methylamino)propyl)trimethoxysilan und Mischungen dieser Komponenten. Amino-funktionalisierte Silane verbessern die Schichtvernetzung und die Anhaftung der Schicht an das Substrat.

Ferner kann die Beschichtungszusammensetzung eines oder mehrere Mercaptosilane umfassen. Mercaptosilane verbessern die Haftung der Schicht an das Substrat.

In einer bevorzugten Ausführungsform umfasst die Beschichtungszusammensetzung polyfunktionale organische Monomere und/oder Organosilane. Diese Monomere haben vorzugsweise 2 oder 3 oder 4 organisch vernetzbare funktionelle Gruppen. Bevorzugte Substanzen dieser Gruppe sind Bismethacrylate, Bisepoxyde, Bismethacrylatsilane, Bisepoxydsilane, Bismethacrylaturethansilane und Mischungen dieser Substanzen.

Folgende Substanzen oder Mischungen daraus sind besonders bevorzugt: Triethylenglycoldimethacrylat, Diethylenglycoldimethacrylat, Tetraethylenglycoldimethacrylat, Ethylenglycoldimethacrylat, Polyethylenglycoldimethacrylat, Butandioldimethacrylat, Hexandioldimethacrylat, Decandioldimethacrylat, Dodecandioldimethacrylat, Bisphenol-A-dimethacrylat, Trimethylolpropantrimethacrylat, ethoxyliertes Bisphenol-A-dimethacrylat, Bis-GMA (2,2-bis-4-(3-methacryloxy-2-hydroxypropyl)-phenylpropan) und 3,4-Epoxycyclohexylmethyl-3,4-epoxycyclohexancarboxylat sowie Reaktionsprodukte von Isocyanaten, insbesondere Di- und/oder Triisocyanaten, mit OH-Gruppenhaltigen Methacrylaten.

Beispielsweise können dies die Reaktionsprodukte von 1 Mol Hexamethylendiisocyanat mit 2 Mol 2-Hydroxyethylmethacrylat, von 1 Mol (Tri(6-isocyanatohexyl)biuret mit 3 Mol Hydroxyethylmethacrylat oder von 1 Mol Trimethylhexamethylendiisocyanat mit 2 Mol Hydroxyethylmethacrylat sein. Diese werden auch als Urethandimethacrylate bezeichnet.

Als bevorzugte Polysiloxane werden verzweigte Polysiloxane eingesetzt. Besonders bevorzugt werden trifunktionale und/oder tetrafunktionale Polysiloxane verwendet. Bevorzugt sind auch zyklische und/oder ringförmige Polysiloxane verwendet.

Der Beschichtungszusammensetzung können in einer besonderen Ausführungsform sogenannte Polysilsesquisiloxanverbindungen (POSS) als Polysiloxan zugesetzt werden.

Der Anteil an Polysiloxan an der Sol-Gel-Schicht soll vorzugsweise wenigstens 10 Gew.-% und höchstens 80 Gew.-% bezogen auf die Sol-Gel-Schicht betragen, weiter bevorzugt sind wenigstens 35 Gew.-% und höchstens 65 Gew.-%.

Damit die Beschichtungszusammensetzungen umweltverträglich, sicher und siebdruckfähig sind, haben diese vorzugsweise einen Lösungsmittelgehalt von nicht mehr als 20 Gew.-%, weiter bevorzugt weniger als 10 Gew.-%. Bevorzugt werden hierfür Lösungsmittel mit einem geringen Dampfdruck von (bei Raumtemperatur) kleiner als 2 bar und/oder einem Siedepunkt größer 120 °C eingesetzt. Ein bevorzugtes Lösungsmittel ist Diethylenglycolmonoethylether. Hierzu wird beispielsweise bei der Herstellung der Beschichtungszusammensetzungen ein Lösungsmitteltausch von leicht flüchtigen Alkoholen gegen Diethylenglycolmonoethylether durchgeführt. Dadurch wird erreicht, dass im Siebdruckverfahren das Sieb beim kontinuierlichen Auftragen der Beschichtungszusammensetzung nicht zugesetzt wird. In bevorzugten Ausführungsformen ist die Beschichtungszusammensetzung allerdings lösungsmittelfrei.

Um Defekte, Schichtunebenheiten, Entmischungseffekte, Blasen und/oder Schaumbildung zu vermeiden, werden der Beschichtungslösung bevorzugt Additive zugegeben. Dieses Additive können bis zu 5 Gew.-%, bevorzugt bis zu 2 Gew.-% der Beschichtungslösung ausmachen. Bevorzugte Additive sind Entlüfter, Entschäumer, Nivellierer und Dispergiermittel. Sie können beispielsweise von der Firma TEGO (EVONIK) kommerziell erworben werden und sind dem Fachmann als typische Lackadditive bekannt. Im Speziellen handelt es sich um reine und/oder organisch modifizierte niedermolekulare Polysiloxane, organische Polymere, fluorfunktionalisierte Polymere, polyethermodifizierte Polysiloxane, Polyacrylate und/oder basische oder saure Fettsäurederivate.

In besonderer Ausführungsform kann die Beschichtungszusammensetzung auch UV- oder thermisch vernetzende organische oder hybridpolymere Bestandteile enthalten.

Um die Strahlungsbasierte Polymerisation zu starten wird der Beschichtungslösung zumeist ein UV-Starter zugegeben. Diese dem Fachmann bekannten Photostarter werden bspw. unter dem Markennamen Irgacure von der Firma BASF hergestellt. In einer bevorzugten erfindungsgemäßen Ausführungsform werden radikalische Photostarter verwendet, welche oberhalb von 300 nm mittels UV-Strahlung angeregt werden können.

Wird die hier beschriebene Beschichtungszusammensetzung verwendet, können dicke Filme auf das Substrat aufgebracht werden, die nahezu keinen Schrumpf gegenüber der aufgebrachten Nassfilmdicke erleiden, weil sie wenig oder kein Lösungsmittel enthalten.

Bei manchen Beschichtungszusammensetzungen ist es ratsam, die Primärschicht kurz vorzuhärten, bevorzugt ist die Vorhärtung mittels photochemischer Prozesse. Dies ist besonders dann von Vorteil, wenn anschließend mit UV-Licht gehärtet werden soll. Die Vorhärtung kann aber auch thermisch, insbesondere mittels eines IR-Strahlers realisiert werden.

Sofern die erste Schicht strukturiert werden soll, wird auf die Primärschicht ein Prägestempel aufgebracht. Dies kann kontinuierlich oder statisch geschehen. In einer Ausführungsform kann der Prägestempel mit einer Sol-Gel-Schicht versehen sein. Der Prägestempel drückt die gewünschte Struktur in die Primärschicht.

Der Prägestempel wird in diesem Schritt vorzugsweise mit einem Anpressdruck von 0,01 bis 5 bar auf die Primärschicht gedrückt. In einer besonderen Ausführungsform findet dieser Schritt unter Vakuum statt.

Es liegt nun, während der optionalen Strukturierung, ein Verbund aus wenigstens den Komponenten Substrat, Primärschicht und Prägestempel vor. Dabei wird vorzugsweise ein Druck auf den Verbund ausgeübt, so dass die Komponenten aufeinander gepresst werden. Die Primärschicht wird dann gehärtet.

Die Härtung erfolgt vorzugsweise thermisch und/oder photochemisch. Besonders bevorzugt ist die photochemische Härtung. In einer anderen Ausführungsform wird kein Druck auf den Verbund ausgeübt, da sich die Beschichtungszusammensetzung der Strukturschicht, die vor der Härtung noch flüssig ist, von allein in die Struktur des Stempels zieht.

In einem optionalen Verfahrensschritt werden Blasen mit der Hand, einer Walze oder mittels eines geringen Unterdrucks entfernt; der Unterdruck liegt dann bei kleiner 900 mbar. Durch die Härtung wird die Strukturschicht so fest, dass der Prägestempel abgehoben werden kann.

Wie oben erläutert, ist der Strukturierungsschritt mit dem Prägestempel optional. Er wird nur durchgeführt, wenn die Sol-Gel-Schicht eine Struktur tragen soll. Wird keine Struktur gewünscht, so kann die Primärschicht natürlich ohne Prägestempel getrocknet werden, um eine Sol-Gel-Schicht ohne Strukturierung zu erhalten.

Wenn das Härten der ersten Schicht thermisch erfolgt, liegt die Temperatur in einem Bereich von 50 bis 150°C. Die Photochemische Härtung erfolgt mittels einer UV-Lichtquelle welche bei einer Wellenlänge von 200 - 400 nm ihr Emissionsmaximum hat.

In besonderen Ausführungsformen kann bereits die Aushärtung während dieses Schrittes erfolgen. Das heißt, dass kein weiterer Aushärtungsschritt erforderlich ist. Diese Härtung kann durch UV-Licht erfolgen.

Nach der Härtung oder ggf. Aushärtung wird der Prägestempel, sofern verwendet, wieder entfernt. Nach Entfernen des Prägestempels liegt die Sol-Gel-Schicht in Form einer strukturierten Dickschicht vor. Die Schichtdicke der Sol-Gel-Schicht beträgt vorzugsweise in etwa bis zu 200 µm. Die in der Strukturschicht erzielten Strukturen sind durch die Struktur des Prägestempels vorgegeben.

Bevorzugt beträgt die Schichtdicke der Sol-Gel-Schicht wenigstens 5 µm, bevorzugt wenigstens 10 µm und weiter bevorzugt wenigstens 20 µm.

Die Sol-Gel-Schicht wird optional nach dem Entfernen des Prägestempels ausgehärtet. Sie wird insbesondere thermisch ausgehärtet, wenn der erste Härtungsschritt mit UV-Licht durchgeführt wurde. Hierbei kommt es neben einer weiteren vorteilhaften Vernetzung der organischen Monomere vor allem zu einer weiteren Vernetzung (Kondensation) der Hydroxylgruppen (unter anderem unter Abspaltung der Alkoxidgruppen) des Si-O-Netzwerkes. Hierbei kommt es vor allem zu einer vorteilhaften kovalenten Verbindung des Polysiloxannetzwerkes mit dem Sol-Gel-Netzwerk. Diese Vernetzungsreaktion wird vorzugsweise bei Temperaturen zwischen 150 und 300 °C, ganz besonders bevorzugt bei Temperaturen zwischen 220 und 270 °C durchgeführt.

In alternativen Ausführungsformen ist die Temperatur, bei der ausgehärtet wird, vorzugsweise in einem Bereich von 50 bis 1000°C, weiter bevorzugt bei 100 bis 500°C. Sofern organische Bestandteile der Sol-Gel-Schicht ausgebrannt werden sollen, wird eine Temperatur von wenigstens 250°C, bevorzugt >300°C, ganz besonders bevorzugt >500°C, eingestellt. Es hat sich gezeigt, dass die Struktur erhalten bleibt auch im Fall, dass die organischen Bestandteile restlos ausgebrannt werden. Der Strukturschrumpf in Relation zur Struktur des Masters nimmt mit sinkender Aufarbeitungstemperatur und steigendem Partikelgehalt der Beschichtungszusammensetzung zwischen 0 und 60 % ab. Der Strukturschrumpf kann jedoch mit einer Struktur des Masters ausgeglichen werden, die etwas tiefer ist als die final gewünschte Struktur in der Sol-Gel-Schicht.

In einer besonderen Ausführungsform ist das Verfahren dadurch gekennzeichnet, dass die Aushärtung der Sol-Gel-Schicht thermisch in einem Temperaturbereich von 100 bis 1000°C erfolgt, insbesondere bevorzugt in einem Temperaturbereich zwischen 450 und 740°C.

Die Zusammensetzung der Sol-Gel-Schicht ist dadurch gekennzeichnet, dass mind. 25 bis 100 Gew.-%, besonders bevorzugt 40 - 80 Gew.-%, ganz besonders bevorzugt 45 - 65 Gew.-% SiO₂ enthalten ist. In einer speziellen erfindungsgemäßen Ausführungsform ist der SiO₂ - Gehalt 50 - 58 Gew.-%. Der SiO₂ Gehalt bezieht sich dabei auf den Restfeststoffgehalt an SiO₂ nach einer thermischen Behandlung des strukturierten Schichtmaterials bei 700 °C für 1 Stunde.

Die bevorzugte Tiefe der Strukturen in einer strukturierten Sol-Gel-Schicht variiert in einem Bereich von 1 µm bis 100 µm, bevorzugt von 4 µm bis 40 µm, ganz besonders bevorzugt von 10 bis 30 µm. Als Strukturen kommen periodische oder statistische Strukturen in Frage, es sind dabei bevorzugt Linsen, sinusoidale Strukturen, refraktive Liniengitter, refraktive Kreuzgitter, diffraktive Liniengitter, diffraktive Kreuzgitter, diffraktive Mottenaugenstrukturen, diffraktive optische Elemente, Zahlen, Codes, insbesondere Barcodes und/oder Produktcodes, Pyramidenstrukturen, invertierte Pyramidenstrukturen, Sicherheitsmerkmale, holographische Strukturen, Auskopplungsstrukturen für OLEDs oder für LEDs, Streustrukturen für Lichtelemente und/oder Lichtlenkstrukturen für Tageslicht bei Fassaden oder Deckenelementen. Es lassen sich aber auch Linien einer gebürsteten Oberfläche, Streuschichten verschiedenster Art und geätzte Oberflächen sowie haptische Strukturen nachbilden.

Die Sol-Gel-Schicht ist strukturgebend für die nachfolgenden Schichten. Das bedeutet, dass eine nachfolgend aufgebrachte Funktionsschicht wie etwa eine Metallschicht oder eine Lackschicht die Oberflächenstruktur der Sol-Gel-Schicht vorzugsweise annimmt.

Die Beschichtungszusammensetzung enthält vorzugsweise hydrolysierte und kondensierte epoxy- oder methacrylatfunktionalisierte Alkoxysilane als Sol-Gel-Vorstufen. Daher enthält die Sol-Gel-Schicht die daraus entstandenen Hybridpolymere. Epoxydfunktionalisierte Alkoxysilane können besonders vorteilhaft verwendet werden, weil damit der Strukturschrumpf vermindert wird, was eine bessere Strukturgenauigkeit ermöglicht.

Werden die Sol-Gel-Schichten nach dieser Erfindung hergestellt, haben sie vorzugsweise einen anorganischen Vernetzungsgrad von mehr als 70%, vorzugsweise mehr als 80%. Dies führt zu den erfindungsgemäßen Vorteilen insbesondere hinsichtlich der Elastizität und der Beständigkeit der Schicht. Der anorganische Vernetzungsgrad wird mit Hilfe des ²⁹Si-NMR bestimmt.

Damit dies erzielt wird, sollte die Beschichtungszusammensetzung im Herstellungsverfahren vorzugsweise Methyl-, Ethyl- oder Phenylsubstituierte Alkoxysilane aufweisen. Wahlweise können auch weitere organisch vernetzende Bestandteile enthalten sein.

In der Sol-Gel-Schicht befindet sich vorzugsweise ein Kompositmaterial, das ein Reaktionsprodukt eines Polysiloxans mit wenigstens einem Alkoxysilan ist. Dieses Komposit weist bei erfindungsgemäßer Herstellung einen Substitutionsgrad von 0,5 bis 1,5, vorzugsweise 0,7 bis 1,5 und ganz besonders bevorzugt von 0,8 bis 1,3 auf. Der Substitutionsgrad ist die mittlere Anzahl an Silizium-Kohlenstoffbindungen pro Siliziumatom im Komposit. Der Substitutionsgrad kann über ²⁹Si-NMR bestimmt werden.

Die Sol-Gel-Schicht umfasst bevorzugt das Hybridpolymer von Alkoxysilanvorstufen, wobei als Alkoxysilanvorstufe besonders (3-Glycidoxypropyl)triethoxysilan und (3-Methacryloxypropyl)trimethoxysilan bevorzugt sind. Bei dem zugefügten Polysiloxan handelt es sich vorzugsweise um ein Phenylmethylpolysiloxan.

Der Hydroxylgruppengehalt dieses Kompositmaterials beträgt 1 bis 5 Gew.-%, bevorzugt 1 bis 4 Gew.-%.

Das Silizium-Kohlenstoffverhältnis (Si:C-Verhältnis) gibt das Verhältnis der Stoffmengen von Silizium zu Kohlenstoff im Kompositmaterial der Sol-Gel-Schicht an. Dieses Verhältnis beträgt vorzugsweise 20:1 bis 1:5, insbesondere 10:1 bis 1:2 und besonders bevorzugt 7:1 bis 2:1. Dieses Verhältnis kann über eine Elementaranalyse bestimmt werden.

Der organische Vernetzungsgrad der Sol-Gel-Schicht beträgt vorzugsweise mehr als 30%, besonders bevorzugt mehr als 50%. Dieser Vernetzungsgrad wird mittels Ramanmessung bestimmt und erfolgt beispielsweise über eine Intensitätsmessung der Bande des Epoxyrings bei 1269 cm⁻¹. Als Vergleich wird die Bande der CH₂-Schwingung bei 1299 cm⁻¹ verwendet.

Die Sol-Gel-Schicht weist aufgrund des bevorzugten Herstellungsverfahrens vorzugsweise einen beta-OH-Gehalt von 0,01 bis 100 /mm, bevorzugt 0,05 bis 10 /mm und insbesondere 0,1 bis 2 /mm auf. Die Messung des beta-OH-Gehaltes erfolgte mit der in WO 2009/998915 beschriebenen Methode. Die Schichtdicken der Schichten betrugen zwischen 10 -50 µm.

Der niedrige beta-OH-Gehalt geht direkt einher mit einer niedrigen Oberflächenenergie der Sol-Gel-Schicht. Daher weisen die erfindungsgemäßen Sol-Gel-Schichten eine niedrige Oberflächenenergie auf, etwa mit einem polaren Anteil von vorzugsweise weniger als 25 mN/m, insbesondere kleiner 15 mN/m und einem dispersen Anteil von vorzugsweise weniger als 40 mN/m, insbesondere kleiner 35 mN/m. Dieser Effekt führt zu einem Randwinkel gegenüber Wasser von bevorzugt größer 50°, insbesondere größer 75° und bevorzugt größer 85°, wodurch die Sol-Gel-Schicht hydrophobe Eigenschaften und damit einen gewissen schmutzabweisenden Effekt erhält. Dieser Effekt ist in erster Linie auf die Sol-Gel-Schicht als solche und nicht so sehr auf deren optionale Strukturierung zurückzuführen, wobei der hohe Substitutionsgrad des Si-O-Netzwerkes und die geringe Porosität signifikant dazu beitragen. Durch eine eingeprägte Struktur kann der Effekt noch verstärkt werden. In einer besonderen Ausführungsform kann so eine superhydrophobe und superoleophobe Oberfläche hergestellt werden.

Der Masseverlust der Sol-Gel-Schicht beträgt nach einer Belastung bei 300 °C für eine halbe Stunde aufgrund des hohen Substitutionsgrades des Netzwerkes bevorzugt maximal 30 Gew.-%, besonders bevorzugt maximal 15 Gew.-%.

Erfindungsgemäß können die Verbundstoffe eine Vielzahl von Substraten umfassen. Mit dem erfindungsgemäßen Verfahren lassen sich Schichten auf fast jedem Substrat erzeugen. Da diese Erfindung es durch den gezielten Einsatz von Partikeln ermöglicht, den Brechungsindex der Sol-Gel-Schicht an den Brechungsindex des Substrates anzupassen, können sogar transparente Verbundstoffe erhalten werden. Dies kann vorteilhaft bei der erfindungsgemäßen Beschichtung von transparenten Substraten ausgenutzt werden. Daher sind transparente Substrate besonders bevorzugt. In einer Ausführungsform ist das Substrat ausgewählt aus transparenten Kunststoffen, wie Polycarbonaten, Polyacrylaten, Polyolefinen und cycloolefinischen Copolymeren

Besonders bevorzugt sind jedoch anorganische Substrate, weil sie meistens eine bessere Temperaturbeständigkeit als organische Substrate aufweisen. Besonders bevorzugt sind Kalknatrongläser, insbesondere eisenarme Kalknatrongläser, Borosilicatgläser, Alumosilicatgläser und Glaskeramiken, insbesondere transparente Glaskeramiken, sowie Laminate von verschiedenen Gläsern, Glaskeramiken und/oder Keramiken. Die Gläser können chemisch und/oder thermisch vorgespannt, sowie rohrförmig und/oder gebogen sein. Die Gläser können in Form von Fläschchen, Ampullen oder Spritzen vorliegen.

Erfindungsgemäß ist auch die Verwendung der beschriebenen Verbundstoffe in Mikrolinsensystemen, Pharmaverpackungen, Lichtlenksystemen im Architekturbereich, Verbundwerkstoffen für die Beleuchtungstechnik, Auskoppelungsschichten für OLEDs und Auskoppelungsschichten für LEDs bevorzugt auf gekrümmten Substraten.

Das erfindungsgemäße Verfahren ermöglicht das direkte Aufbringen der gewünschten Schichten mit oder ohne Oberflächenstrukturierung auf ein fertiges Produkt.

Die erfindungsgemäßen Sol-Gel-Schichten haben gleichzeitig eine Barrierewirkung, im speziellen gegenüber Diffusion.

In speziellen Ausführungsformen wird vor der Beschichtung ein Primer auf die Oberfläche des Substrates angewendet.

In bevorzugten Ausführungsformen wird ein Konditionierungsschritt der Oberfläche des Substrates durchgeführt.

In einer weiteren Ausführungsform wird die Sol-Gel-Schicht mit wenigstens einer Funktionsschicht versehen. Die Funktionsschicht kann antistatisch, hydrophob, hydrophil, oleophob, photokatalytisch, thermokatalytisch, spiegelnd, optisch aktiv, farbig und/oder elektrisch leitfähig ausgebildet sein.

In einer bevorzugten Ausführungsform hat das Substrat mit der Sol-Gel-Schicht eine Transmission von >90% und eine Absorption <5% bevorzugt <2%, ganz besonders bevorzugt <1%, in einem Wellenlängenbereich von 300 bis 800 nm und einer Schichtdicke von 5 µm bevorzugt sogar 10 µm.

Die Brechzahl einer besonderen erfindungsgemäßen Ausführungsform der Sol-Gel-Schicht beträgt bevorzugt zwischen 1,4 und 1,6. Bevorzugt beträgt sie 1,45 bis 1,55. In einer weiteren erfindungsgemäßen Ausführungsform liegt die Brechzahl der polysiloxanmodifizierten Sol-Gel-Schicht zwischen 1,6 und 1,7. Bevorzugt ist sie an das Substrat angepasst und unterscheidet sich nicht mehr als 0,05 Punkte in ihrer Brechzahl vom verwendeten Substrat.

Der Elastizitätsmodul der erfindungsgemäßen Schichten liegt nach UV-Härtung bei 200 bis 4000 N/mm², bevorzugt bei 300 - 3000 N/mm², ganz besonders bevorzugt bei 500 - 2000 N/mm².

Das Elastizitätsmodul der erfindungsgemäßen Schichten liegt nach thermischer Härtung von 140 - 300 °C bei 500 bis 10000 N/mm², bevorzugt bei 750 - 6000 N/mm², ganz besonders bevorzugt bei 1250 - 5000 N/mm².

Mit anderen Worten, der Elastizitätsmodul der erfindungsgemäßen Sol-Gel-Schichten beträgt vorzugsweise von 200 bis 4000 N/mm² oder 500 bis 10 000 N/mm². In einer anderen bevorzugten Ausführungsform beträgt der Elastizitätsmodul vorzugsweise von 500 bis 4000 N/mm² oder von >4000 bis 10 000 N/mm². Die mechanischen Eigenschaften, insbesondere der Young'sche Elastizitätsmodul der erfindungsgemäßen Schichten wird bevorzugt mit einem Nanoindenter bestimmt bzw. aus der Nanoindenter-Messung errechnet. Dem Fachmann sind solche Verfahren aus der Literatur bekannt. Die Verfahren entsprechen dem Model nach Hertz, wie bspw. von Q. Liao et al. in Mech. of Mat. 42 (2010) 1043-1047 oder in Thin Solid Films 516 (2008) 1056 - 1062 beschrieben.

In einer besonderen Ausführungsform befinden sich auf den verwendeten Substraten, beispielsweise auf der nicht beschichteten Seite, noch weitere dekorative oder funktionale Schichten, wie beispielsweise, leitfähige transparente Schichten, leitfähige metallische Schichten, Mehrschichtantireflexbeschichtungen, poröse Antireflexbeschichtungen, optische Filterbeschichtungen, IR-reflektierende Beschichtungen, Antihaftbeschichtungen, Antifingerprintbeschichtungen, easy-to-clean-Beschichtungen, Barriereschichten und/oder farbige keramische Emaille-Beschichtungen.

In einer bevorzugten Ausführungsform umfasst die strukturierte Sol-Gel-Schicht eine dekorative Schicht für Vorsatzscheiben aus Glas, wie sie beispielsweise im Hausgerätebereich oder im Architekturbereich (Innen und Außenbereich) oder im Automobilbereich oder im Flugzeugbau oder im Maschinenbau (bspw. Aufzüge) eingesetzt werden können. Die dekorative Schicht ist in die Sol-Gel-Schicht eingeprägt. Eine Vorsatzscheibe aus Glas ist dabei dadurch gekennzeichnet, dass sie als eine Art Blende wirkt. Solche Blenden werden im Stand der Technik beispielsweise aus Edelstahl gefertigt.

Erfindungsgemäß lässt sich der Verbundstoff somit in oder als Kühlschranktüren, Backofenscheiben, Dampfgarern, Kochflächen für Gasanwendungen, Glasschneidbretter, Verkleidungen für Fernseher oder elektronische Gerate, Abzugshauben, Aufzüge verwenden. In diesem Fall können Strukturen in die Sol-Gel-Schicht eingebracht werden, welche die Bürstung von Metall oder die Oberfläche von gesandstrahltem und/oder geätztem Glas imitieren. Die entsprechenden Strukturen können dann einfach als Master eingesetzt werden, um den oben beschriebenen Prägestempel bereit zu stellen.

In der Regel handelt es sich hierbei um statistische Strukturen, welche eine Strukturtiefe von 40 nm bis 10 µm aufweisen. Im Falle der gebürsteten Edelstahlstrukturen sind dies beispielsweise rund oder linear gebürstete Riefenstrukturen, mit einer Tiefe von vorzugsweise bis zu 3 µm, ganz besonders bevorzugt bis zu einer Strukturtiefe von 2 µm.

In einer besonderen Ausführungsform wird, zur Erzielung einer Edelstahloptik auf die strukturierte Schicht eine oder mehrere metallisch anmutende Schichten über ein Flüssigbeschichtungsverfahren oder eine Abscheideverfahren, wie beispielsweise Sputtern oder CVD, aufgebracht. Diese metallisch anmutenden Schichten können dabei aus Metall oder einem Halbmetall oder einem organischen und oder einem anorganischem Lack bestehen. Bevorzugt ist eine Metallschicht mit einem Edelstahl-, Chrom-, Aluminium-, Kupfer-, Platin- oder Rhodiumfarbort. Bevorzugt wird zur Abscheidung einer metallisch anmutenden Schicht das Sputterverfahren und/oder eine Lüsterfarbe und/oder eine pigmentierte Sol-Gel-Farbe und/oder eine pigmentierte oder eingefärbte organische Farbe verwendet.

Die Dicke der metallisch anmutenden Schicht liegt dabei zwischen 50 und 500 nm, bevorzugt zwischen 60 und 200 nm. bevorzugt wird ein Edelstahltarget, ein Cr-Target, ein Cu-Target und/oder ein AI-Target zur Herstellung der metallisch anmutenden Schichten über das Sputterverfahren verwendet. In einer Besonderen Ausführungsform ist der Farbort der Cr-Schicht durch geeignete Prozessführung an den Farbort von Edelstahl angepasst.

In einer besonderen Ausführungsform kann die metallische anmutende Schicht mit mehreren Schutzschichten versehen sein. Weiterhin wird in einer bevorzugten Ausführungsform auf die metallisch anmutende Schicht eine organische, polysiloxanbasierte und/oder Sol-Gel-basierte Versiegelungsschicht aufgebracht. Dies kann z.B. eine Epoxy- und/oder Polyurethan-basierte kratzbeständige Beschichtung (BSH-test >1000 g) sein.

### Beispiele

### Ausführungsbeispiel 1

In einem Gefäß wurden 0,06 mol GPTES (Glycidoxypropyltriethoxysilan) mit 0,02 mol TEOS (Tetraethoxysilan) mit 0,02 mol PTEOS (Phenyltriethoxysilan) vorgelegt und mit 2,3 g Wasser, in welchem 0,344 g PTSH (Paratoluolsulfonsäure) gelöst waren, hydrolysiert. Nach 3-stündigem Rühren wurden die leicht flüchtigen Reaktionsprodukte im Rotationsverdampfer entfernt. In 10 g des so erhaltenen Hydrolysats wurden 5 g eines Polysiloxanharzes mit einem Phenyl/Methyl-Verhältnis von 1.2/1, einer molekularen Masse von 2000 bis 7000 und einem SiO₂ -Gehalt von ca. 52 % gelöst.

Zu der Beschichtungszusammensetzung wurden anschließend 1,5 ml einer 20%igen Lösung des kationischen Photostarters Irgacure® 250 in 1-Methoxy-2-propanol gegeben. Anschließend wurden am Rotationsverdampfer die leicht flüchtigen Bestandteilteile entfernt.

Mittels Rakeln wurde unter Verwendung von 90 µm Spaltbreite zwischen Lackhantel und Substratoberfläche eine Primärschicht einseitig auf ein Borofloatglassubstrat aufgebracht. Die Primärschicht wurde unter einer UV-Lampe für 10 s vorgehärtet. Auf die immer noch weiche Primärschicht wurde ein mit Mikrolinsen strukturierter Silikonstempel (PDMS) aufgebracht und anschließend mit Hilfe der UV-Lampe durch den Stempel hindurch ausgehärtet (Belichtungszeit: 5 min). Nach Entfernen des Stempels ist die Struktur des Stempels in die Primärschicht übertragen worden. Die Endschichtdicke der ersten Schicht beträgt ca. 25 µm.

Die Sol-Gel-Schicht hatte nach UV-Härtung einen Elastizitätsmodul von 800 N/mm² +/-10% und nach thermischer Härtung bei 200 °C für 1 h einen Elastizitätsmodul von 2000 N/mm²+/- 10%.

### Ausführungsbeispiel 2

In einem Gefäß wurden 0,06 mol GPTES (Glycidoxypropyltriethoxysilan) mit 0,02 mol TEOS (Tetraethoxysilan), 0,01 mol MTEOS (Methyltriethoxysilan) und 0,01 mol DMDEOS (Dimethyldiethoxysilan) vorgelegt und mit 2,3 g Wasser, in welchem 0,344 g PTSH (Paratoluolsulfonsäure) gelöst waren, hydrolysiert. Nach 3-stündigem Rühren, wurden die entstandenen, leicht flüchtigen Reaktionsprodukte im Rotationsverdampfer aus dem Gemisch entfernt.

10 g des Hydrolysates wurden mit 8,5 g einer 50 %igen Lösung eines Phenylpolysiloxanharzes in Ethanol versetzt.

Der Beschichtungszusammensetzung wurden schließlich 3 g einer 20%igen Lösung des kationischen Photostarters Irgacure® 250 in 1-Methoxy-2-propanol zugesetzt.

Anschließend wurde das leicht flüchtige Lösungsmittel am Rotationsverdampfer bei 80 °C und 100 mbar entfernt.

Mittels Siebdruck wurde unter Verwendung eines 34er Gewebes eine ca. 40 µm dicke Primärschicht auf ein Kalknatronglassubstrat aufgebracht. Anschließend wurde diese Schicht für 2 h bei Raumtemperatur stehen gelassen.

Nach Abdampfen des Lösungsmittels wurde die verbliebene Primärschicht unter einer UV-Lampe für 10 s vorgehärtet. Auf die immer noch nasse Primärschicht wurde anschließend ein strukturierter Silikonstempel (PDMS) mit einer Lichtlenkungsstruktur aufgebracht und die Schicht mit Hilfe der UV-Lampe durch den Stempel hindurch ausgehärtet (Belichtungszeit: 5 min). Nach Entfernen des Stempels ist die Struktur des Stempels in die Primärschicht übertragen worden. Die Endschichtdicke der ersten Schicht betrug ca. 30 µm.

Die Sol-Gel-Schicht hatte nach UV-Härtung einen Elastizitätsmodul von 1200 N/mm² +/-10% und nach thermischer Härtung bei 240°C für 1 h einen Elastizitätsmodul von 2500 N/mm² +/- 10%.

### Ausführungsbeispiel 3

In einem Gefäß wurden 0,06 mol GPTES (Glycidoxypropyltriethoxysilan) mit 0,02 mol TEOS (Tetraethoxysilan), 0,01 mol MTEOS (Methyltriethoxysilan) und 0,01 mol DPDEOS (Diphenyldiethoxysilan) vorgelegt und mit 2,3 g Wasser, in welchem 0,344 g PTSH (Paratoluolsulfonsäure) gelöst waren, hydrolysiert. Nach 3-stündigem Rühren, wurden die entstandenen, leicht flüchtigen Reaktionsprodukte am Rotationsverdampfer aus dem Gemisch entfernt.

10 g des Hydrolysates wurden mit 8,5 g einer 50%igen Lösung eines Polysiloxanharzes mit einem Phenyl/Methyl-Verhältnis von 1.3/1, einer molekularen Masse von 2000 bis 4000, einem SiO₂ -Gehalt von ca. 52 Gew.-% und einem Gehalt an Silanolgruppen von 6 Gew.-% in Butanol versetzt.

Der Beschichtungszusammensetzung wurden schließlich 3 g einer 20%igen Lösung des kationischen Photostarters Irgacure® 250 in 1-Methoxy-2-propanol zugesetzt.

Anschließend wurde das leicht flüchtige Lösungsmittel am Rotationsverdampfer bei 80 °C und 100 mbar entfernt.

Mittels Roll-Coating wurde eine ca. 150 µm dicke Primärschicht auf ein Kalknatronglassubstrat aufgebracht. Anschließend wurde diese Schicht für 2 h bei Raumtemperatur stehen gelassen.

Nach Abdampfen des Lösungsmittels wurde die verbliebene Primärschicht unter einer UV-Lampe für 10 s vorgehärtet. Auf die immer noch nasse Primärschicht wurde anschließend ein strukturierter Silikonstempel (PDMS) mit einer Lichtlenkungsstruktur aufgebracht und die Schicht mit Hilfe der UV-Lampe durch den Stempel hindurch ausgehärtet (Belichtungszeit: 5 min). Nach Entfernen des Stempels war die Struktur des Stempels in die erhaltene Sol-Gel-Schicht übertragen. Die Endschichtdicke des gehärteten Lacks betrug ca. 60 µm.

Die Sol-Gel-Schicht hatte nach thermischer Härtung bei 230 °C für 1 h einen Elastizitätsmodul von 2600 N/mm² +/- 10%.

### Ausführungsbeispiel 4

In einem Gefäß wurden 0,08 mol MPTES (Methacryloxypropyltriethoxysilan) mit 0,02 mol TEOS (Tetraethoxysilan), vorgelegt und mit 1,44 g Wasser, in welchem 0,344 g PTSH (Paratoluolsulfonsaure) gelöst waren, hydrolysiert. Nach 3-stündigem Rühren wurden die entstandenen leicht flüchtigen Reaktionsprodukte am Rotationsverdampfer aus dem Gemisch entfernt.

10 g des Hydrolysates wurden mit 6,0 g einer 75 %-igen Lösung eines Polyestermodifizierten Polysiloxanes in Methoxypropylacetat und Isopropanol versetzt.

Der Beschichtungszusammensetzung wurden schließlich 1 g des radikalischen Photostarters Irgacure® 819 zugesetzt.

Mittels Siebdruck unter Verwendung eines 54er Siebes wurde eine ca. 20 µm dicke Primarschicht auf ein Kalknatronglassubstrat aufgebracht. Anschließend wurde diese Schicht für 1 Min bei ca. 60°C mittels einer IR-Lampe getrocknet.

Auf die immer noch nasse Primarschicht wurde anschließend ein strukturierter Silikonstempel (PDMS) mit einer optischen Linsenstruktur aufgebracht und die Schicht mit Hilfe der UV-Lampe durch den Stempel hindurch ausgehärtet (Belichtungszeit: 2 min). Nach Entfernen des Stempels war die Struktur des Stempels in die erhaltene Sol-Gel-Schicht übertragen. Die Endschichtdicke des gehärteten Lacks betrug ca. 10 µm.

Die Sol-Gel-Schicht hatte nach UV-Härtung einen Elastizitätsmodul von 3360 N/mm² +/-10 % und nach thermischer Härtung bei 280 °C für 0,2 h einen Elastizitätsmodul von 4200 N/mm² +/- 10 %.

### Ausführungsbeispiel 5

In einem Gefäß wurden 0,08 mol MPTES (Methacryloxypropyltriethoxysilan) mit 0,018 mol TEOS (Tetraethoxysilan) vorgelegt und mit 1,15 g Wasser, in welchem 0,21 g PTSH (Paratoluolsulfonsaure) gelöst waren, hydrolysiert. Nach 3-stündigem Rühren, wurden die entstandenen, leicht flüchtigen Reaktionsprodukte am Rotationsverdampfer aus dem Gemisch entfernt.

10 g des Hydrolysates wurden dann mit 15 g einer 75 %-igen Lösung eines Polyestermodifizierten Polysiloxanes in Methoxypropylacetat und Isopropanol versetzt. Hierzu wurden anschließend 30 g einer 20 Gew.-%-igen Lösung von hoch brechenden Nanopartikeln (TiO₂, Anatase, 16 nm) in Propanol hinzugegeben.

Der Beschichtungszusammensetzung wurden schließlich 1 g des radikalischen Photostarters Irgacure® 819 zugesetzt.

Anschließend wurde das leicht flüchtige Lösungsmittel am Rotationsverdampfer bei RT und 30 mbar entfernt.

Mittels Siebdruck wurde eine ca. 40 µm dicke Primärschicht auf ein Kalknatronglassubstrat aufgebracht. Anschließend wurde diese Schicht für 1 Min bei 60°C mittels einer IR-Lampe getrocknet.

Auf die immer noch nasse Primärschicht wurde anschließend ein strukturierter Silikonstempel (PDMS) mit einer optischen Liniengitterstruktur aufgebracht und die Schicht mit Hilfe einer UV-Lampe durch den Stempel hindurch ausgehärtet (Belichtungszeit: 4 min). Nach Entfernen des Stempels war die Struktur des Stempels in die erhaltene Sol-Gel-Schicht übertragen. Die Endschichtdicke des gehärteten Lacks betrug ca. 20 µm und der Lack hatte eine Brechzahl von etwa 1,6.

Die Sol-Gel-Schicht hatte nach UV-Härtung einen Elastizitätsmodul von 2100 N/mm² +/-10 % und nach thermischer Härtung bei 270 °C für 0,2 h einen Elastizitätsmodul von 2800 N/mm² +/- 10 %.

### Ausführungsbeispiel 6

In einem Gefäß wurden 0,08 mol MPTES (Methacryloxypropyltriethoxysilan) mit 0,018 mol TEOS (Tetraethoxysilan), vorgelegt und mit 2,3 g Wasser, in welchem 0,21 g PTSH (Paratoluolsulfonsaure) gelöst waren, hydrolysiert. Nach 3-stündigem Rühren wurden die entstandenen leicht flüchtigen Reaktionsprodukte am Rotationsverdampfer aus dem Gemisch entfernt.

10 g des Hydrolysates wurden mit 5,0 g einer 75 %-igen Lösung eines Polyestermodifizierten Polysiloxanes in einem Methoxypropylacetat/Isopropanol-Gemisch und 0,5 g Glycerin-1,3-dimethacrylaturethan-triethoxysilan versetzt.

Der Beschichtungszusammensetzung wurden schließlich 1 g des radikalischen Photostarters Irgacure® 819 zugesetzt.

Mittels Siebdruck unter Verwendung eines 54er Siebes wurde eine ca. 20 µm dicke Primarschicht auf ein Kalknatronglassubstrat aufgebracht. Anschließend wurde diese Schicht für 1 Min bei ca. 60°C mittels einer IR-Lampe getrocknet.

Auf die immer noch nasse Primarschicht wurde anschließend ein strukturierter Silikonstempel (PDMS) mit einer optischen Linsenstruktur aufgebracht und die Schicht mit Hilfe der UV-Lampe durch den Stempel hindurch ausgehärtet (Belichtungszeit: 2 min). Nach Entfernen des Stempels war die Struktur des Stempels in die erhaltene Sol-Gel-Schicht übertragen. Die mittlere Endschichtdicke des gehärteten Lacks betrug ca. 14 µm.

Die Sol-Gel-Schicht hatte nach UV-Härtung einen Elastizitätsmodul von 3500 N/mm² +/-10% und nach thermischer Härtung bei 280 °C für 0,2 h einen Elastizitätsmodul von 4800 N/mm² +/- 10%.

## Patentansprüche

1. Verbundstoff mit einem Substrat und einer strukturierten Sol-Gel-Schicht,
wobei die Sol-Gel-Schicht einen Elastizitätsmodul, gemessen mit der Nanoindentermethode, von 200 bis 10 000 N/mm² aufweist, wobei die Sol-Gel-Schicht geprägt ist und ein Reaktionsprodukt wenigstens eines Alkoxysilans mit wenigstens einem Polysiloxan aufweist, wobei das Polysiloxan ein zahlenmittleres Molekulargewicht von wenigstens 1500 und höchstens 300 000 g/mol aufweist und wobei das Alkoxysilan mit organisch vernetzbaren Gruppen funktionalisiert ist.

2. Verbundstoff nach Anspruch 1, wobei es sich bei dem Substrat um eine Glaskeramik, ein Glas, eine Keramik oder einen polymeren Kunststoff handelt.

3. Verbundstoff nach Anspruch 1 oder 2, wobei die Sol-Gel-Schicht eine geprägte Strukturierung mit einer Strukturtiefe von 2 µm bis 200 µm aufweist.

4. Verbundstoff nach wenigstens einem der vorhergehenden Ansprüche, wobei die Sol-Gel-Schicht einen SiO₂-Gehalt von 10 bis 70 Gew.-% aufweist.

5. Verbundstoff nach wenigstens einem der vorhergehenden Ansprüche, wobei die Sol-Gel-Schicht einen anorganischen Vernetzungsgrad von größer als 70% aufweist.

6. Verbundstoff nach wenigstens einem der vorhergehenden Ansprüche, herstellbar durch ein Verfahren, in dem eine Beschichtungszusammensetzung auf das Substrat aufgebracht wird, welche wenigstens ein Alkoxysilan und wenigstens ein Polysiloxan umfasst.

7. Verbundstoff nach wenigstens einem der vorhergehenden Ansprüche, wobei das Polysiloxan einen Substitutionsgrad von 0,5 bis 1,5 aufweist.

8. Verbundstoff nach wenigstens einem der vorhergehenden Ansprüche, wobei das Polysiloxan ein polyestermodifiziertes Polysiloxan ist.

9. Verfahren zur Herstellung eines Verbundstoffes nach wenigstens einem der vorhergehenden Ansprüche mit den Schritten
• Beschichten eines Substrates mit einer Beschichtungszusammensetzung, um eine Primärschicht auf dem Substrat zu erhalten,
• Einbringen einer Struktur in die Primärschicht und
• Härten der Primärschicht.

10. Verwendung eines Verbundstoffes nach wenigstens einem der Ansprüche 1 bis 8 in Mikrolinsensystemen, Lichtlenksystemen im Architekturbereich, Auskoppelungsschichten für OLEDs, Auskoppelungsschichten für LEDs, Fingerscanner, Handscanner, Fotokameraoptiken, dekorative Schichten und Blenden für Hausgeräte, Autointerieur, Flugzeugintereur, Innenarchitektur, Fassadenelemente.

## Claims

1. A composite with a substrate and a structured sol-gel layer, wherein the sol-gel layer has a modulus of elasticity of 200 to 10 000 N/mm², measured according to the nanoindentation method, wherein the sol-gel layer is embossed and comprises a reaction product of at least one alkoxysilane with at least one polysiloxane, wherein the polysiloxane has a number average molecular weight of at least 1500 and at most 300 000 g/mol and wherein the alkoxysilane is functionalized with organic crosslinkable groups.

2. The composite according to claim 1, wherein the substrate is a glass ceramic, a glass, a ceramic or a polymeric plastic.

3. The composite according to claim 1 or 2, wherein the sol-gel layer has an embossed structuring with a structural depth of 2 µm to 200 µm.

4. The composite according to at least one of the preceding claims, wherein the sol-gel layer has a content of Si02 of 10 to 70 % by weight.

5. The composite according to at least one of the preceding claims, wherein the sol-gel layer has an inorganic degree of cross-linking of higher than 70 %.

6. The composite according to at least one of the preceding claims, producible through a method in which a coating composition which comprises at least one alkoxysilane and at least one polysiloxane is applied onto the substrate.

7. The composite according to at least one of the preceding claims, wherein the polysiloxane has a degree of substitution of 0.5 to 1.5.

8. The composite according to at least one of the preceding claims, wherein the polysiloxane is a polyester-modified polysiloxane.

9. A method for the production of a composite according to at least one of the preceding claims with the steps of
• coating a substrate with a coating composition for obtaining a primary layer on the substrate,
• incorporating a structure into the primary layer and
• hardening the primary layer.

10. A use of a composite according to at least one of claims 1 to 8 in microlens systems, light guiding systems in the field of architecture, out-coupling layers for OLEDs, out-coupling layers for LEDs, finger scanners, hand scanners, photo camera optics, decorative layers and blinds for house appliances, vehicle interior, airplane interior, interior architecture, façade elements.

## Revendications

1. Matière composite comportant un substrat et une couche de sol-gel structurée, la couche de sol-gel ayant un module d'élasticité, mesurée par le procédé au nano-indenteur, 200 à 10000 N/mm², la couche de sol-gel étant mise en forme et comportant un produit de réaction d'au moins un alcoxysilane avec au moins un polysiloxane, le polysiloxane ayant un poids moléculaire moyen d'au moins 1500 et d'au plus 300000 g/mol et l'alcoxysilane étant fonctionnalisé avec des groupes organiquement réticulables.

2. Matière composite selon la revendication 1, dans laquelle le substrat est une vitrocéramique, un verre, une céramique ou une matière plastique polymère.

3. Matière composite selon la revendication 1 ou la revendication 2, dans laquelle la couche de sol-gel comporte une structure en relief ayant une profondeur structurelle de 2 µm à 200 µm.

4. Matière composite selon l'une au moins des revendications précédentes, dans laquelle la couche de sol-gel a une teneur en SiO₂ de 10 à 70% en poids.

5. Matière composite selon l'une au moins des revendications précédentes, dans laquelle la couche de sol-gel a un degré de réticulation minérale supérieure à 70 %.

6. Matière composite selon l'une au moins des revendications précédentes, pouvant être obtenue par un procédé dans lequel on applique sur le substrat une composition de revêtement qui comprend au moins un alkoxysilane et au moins un polysiloxane.

7. Matière composite selon l'une au moins des revendications précédentes, dans laquelle le polysiloxane a un degré de substitution de 0,5 à 1,5.

8. Matière composite selon l'une au moins des revendications précédentes, dans laquelle le polysiloxane est un polysiloxane modifié par un polyester.

9. Procédé de fabrication d'une matière composite selon l'une au moins des revendications précédentes, comprenant les étapes suivantes
• revêtir un substrat avec une composition de revêtement pour obtenir une couche primaire sur le substrat,
• introduire une structure dans la couche primaire et
• durcir la couche primaire.

10. Utilisation d'une matière composite selon l'une au moins des revendications 1 à 8 dans des systèmes de microlentilles, des systèmes de guidage de lumière dans le domaine de l'architecture, des couches de sortie d'OLEDs, des couches de sortie de LED, des lecteurs d'empreintes digitales, des scanner à main, des optiques de caméra, des couches décoratives et des panneaux destinés à des appareils ménagers, l'habitacle d'automobile, l'intérieur d'aéronef, l'architecture intérieur, des éléments de façade.
